(19) **Europäisches Patentamt / European Patent Office / Office européen des brevets**

(11) **EP 1 204 226 B1**

(12) **EUROPÄISCHE PATENTSCHRIFT**

(45) Veröffentlichungstag und Bekanntmachung des Hinweises auf die Patenterteilung:
**07.02.2007 Patentblatt 2007/06**

(51) Int Cl.:
*H04B 10/00* (2006.01)　　*H04Q 7/18* (2006.01)
*H04L 12/10* (2006.01)　　*H04N 5/63* (2006.01)

(21) Anmeldenummer: **01123816.9**

(22) Anmeldetag: **05.10.2001**

(54) **Energiesparendes Verfahren für den drahtlosen Empfang von auf einem Trägersignal aufmodulierten Daten**

Energy saving method for wireless reception of data modulated on a carrier

Procédé économique en énergie pour la réception sans fil de donnés modulés sur une porteuse

(84) Benannte Vertragsstaaten:
**AT BE CH CY DE DK ES FI FR GB GR IE IT LI LU MC NL PT SE TR**

(30) Priorität: **03.11.2000 DE 10054529**

(43) Veröffentlichungstag der Anmeldung:
**08.05.2002 Patentblatt 2002/19**

(73) Patentinhaber: **Vishay Semiconductor GmbH 74072 Heilbronn (DE)**

(72) Erfinder:
• **Eichin, Matthias
  74080 Heilbronn (DE)**
• **Mistele, Thomas
  74360 Ilsfeld (DE)**

(74) Vertreter: **Manitz, Finsterwald & Partner GbR
Postfach 31 02 20
80102 München (DE)**

(56) Entgegenhaltungen:
**EP-A- 0 663 733**　　**WO-A-98/01994**
**US-A- 5 924 017**

**Beschreibung**

Die Erfindung betrifft ein energiesparendes Verfahren für den drahtlosen Empfang von auf einem Trägersignal aufmodulierten Daten.

Ein bekannter integrierter Empfängerschaltkreis für einen solchen Infrarot-Fernbedienempfänger, der eine digitale Verstärkungsregelung besitzt, ist der Schaltkreis T2521B der Firma ATMEL Germany GmbH. Die Funktionsweise eines solchen Schaltkreises besteht darin, dass das von einem Photodetektor, in der Regel eine Photodiode, empfangene trägermodulierte Signal - das Empfangssignal - in eine Eingangsschaltung eingespeist wird. Die Eingangsschaltung weist einen Transimpedanzverstärker auf, der pulsierende Eingangsstromsignale verstärkt und in Spannungssignale umwandelt. Diese Spannungssignale werden dann in einer Signalaufbereitung bearbeitet. Die Signalaufbereitung weist einen Regelverstärker, einen Limitter und einen Bandpassfilter auf. Hierbei ist die Aufgabe des Regelverstärkers, die Ausgangsspannung vom Transimpedanzverstärker gemäß der Regelvorgabe zu verstärken. Der Limitter hat die Aufgabe den Signalhub zu begrenzen, um eine Übersteuerung des Bandpassfilters zu vermeiden. Der Bandpassfilter ermöglicht die Selektivität des Empfängers und begrenzt dessen Bandbreite. Die Signale am Ausgang des Bandpassfilters werden in einem Demodulator als Auswerteschaltung ausgewertet. Dieser Demodulator besteht aus Komparatoren, einem Integrator und Schmitt-Trigger und erzeugt ein Schaltsignal für einen als Schalter wirkenden Treibertransistor, wodurch ein digitales Steuersignal, beispielsweise einem Mikrocontroller zur Weiterverarbeitung bereitgestellt wird.

Dieser bekannte Schaltkreis enthält ferner eine digitale Verstärkungsregelung, durch die die Verstärkung des Empfängers einem Störfeld entsprechend eingeregelt wird, wodurch eine hohe Empfindlichkeit für die Empfangssignale erreicht wird, jedoch gleichzeitig Störeinflüsse, die beispielsweise von Fremdlicht herrühren, weitgehend unterdrückt werden.

Ein solcher bekannter Schaltkreis für Infrarot-Fernbedienempfänger hat in der Regel Stomaufnahmen von 1 mA bis einigen mA. Bei batteriebetriebenen Empfängern ist damit eine ausreichende Lebensdauer der Batterien von etwa einem Jahr bei permanenter Empfangsbereitschaft nicht gegeben.

Daher wird versucht durch externe Taktung der Versorgungsspannung einen Energiesparbetrieb mit niedriger mittlerer Stromaufnahme zu realisieren um damit die Lebensdauer der Batterien auf über ein Jahr zu erhöhen. Ein solches Verfahren für den Betrieb eines Infrarot-Empfängers ist aus der EP 0 663 733 A1 bekannt, bei dem dieser Infrarot-Empfänger über einen Intervallschalter an eine batteriegespeiste Schaltung zur Spannungsversorgung angeschlossen ist und hierüber zyklisch mit elektrischer Energie versorgt wird. Mittels eines Startsignals, dessen Signaldauer die Zeitspanne der Schaltintervalle des Intervallschalters übersteigt, wird der intermittierende Betrieb aufgehoben, indem die Empfängerschaltung mit der Spannungsversorgung verbunden wird. Dies hat zur Folge, daß der Empfänger durch einen Power-on-Reset (POR) empfangsbereit wird und zumindest für die Sendezeit der sich an das Startsignal anschließenden Steuersignalübertragung ununterbrochen an die Spannungsversorgung angeschlossen bleibt. Dabei wird die Verstärkerstufe des Empfängers auf etwa die Hälfte der Maximalempfindlichkeit eingestellt. Da die Regelung für Fernsteuerungsempfänger vorzugsweise im 100-Millisekundenbereich arbeitet, kann die Empfindlichkeit für optische Nutzsignale direkt nach der Inbetriebnahme um den Faktor 2 geringer sein. Ist dabei einerseits das Störumfeld zu groß, so daß die Verstärkereinstellung nach dem POR für dieses Umfeld zu groß ist, wird der korrekte Empfang von Nutzsignalen nur mit erhöhter Bitfehlerrate möglich. Andererseits kann bei ungestörtem Umfeld die maximale Empfindlichkeit nicht erreicht werden. Ferner sollte die maximale Antwortzeit auf ein Fernbedienbefehl 200ms nicht überschreiten. Diese Zeitdauer entspricht der Intervallzeit, in der dieser Empfänger betrieben wird. Um die mittlere Stromaufnahme auf bspw. 5 $\mu$A zu reduzieren, ist eine maximale "An-Zeit" von 1 ms einzuhalten. Wohl weist dieser so betriebene bekannte Empfänger eine genügend kleine Stromaufnahme auf, jedoch gehen aufgrund der zyklischen Freischaltung von der Energiequelle die die Eigenschaften des Empfängers bestimmenden Einstellungen, bspw. die Verstärkungseigenschaften verloren, wodurch der Empfänger wieder mit dem Anfangszustand arbeiten muß, der entweder eine unempfindlichere, d. h. eine verminderte Reichweite, oder eine zu empfindliche Einstellung , d. h. eine erhöhte Bitfehlerrate, besitzen kann. Damit ist der Einsatzbereich eines solchen Empfängers sehr stark eingeschränkt.

Aus der US 5,924,017 ist es bekannt, einer Pager-Einrichtung ein Auf weck-Intervall zu übermitteln, das in der Pager-Einrichtung gespeichert wird, wobei die Pager-Einrichtung entsprechend dem gespeicherten Aufweck-Intervall aktiv wird.

Aus der WO 98/01994 A1 ist eine Stromsparschaltung bekannt, die als separates Gerät einem zu steuernden elektronischen Gerät vorschaltbar ist.

Aufgabe der Erfindung ist es, ein energiesparendes Verfahren zum Betreiben eines Empfängerschaltkreises anzugeben, das die o. g. Nachteile vermeidet - also zu gleichen Empfängereigenschaften führt, die denjenigen der im Dauerbetrieb betriebenen Empfängern entsprechen - und mit dem trotzdem ein deutliche Senkung der Stromaufnahme erreicht wird.

Diese Aufgabe wird durch die Merkmale des Patentanspruchs 1 gelöst. Hiernach wird der Empfängerschaltkreis im intermittierenden Betrieb nicht vollständig von der Betriebsspannungsquelle freigeschaltet, sondern nur die wesentlichen Schaltungsteile des Empfängers, nämlich diejenigen, die die Rückgewinnung der Daten aus dem Trägersignal vornehmen, also insbesondere Eingangsstufe, Verstärkerstufen, Bandfilter und Demodulator. Dagegen werden solche Schaltungsteile ununterbrochen mit elektrischer Energie versorgt, die bspw. die der Umgebung angepaßte Verstärkereinstellungen vornehmen und folglich aufgrund der ständigen Versorgung mit Betriebsspannung diese Informationen nicht verlorengehen, so daß bei erneuter Inbetriebnahme in der Energieversorgungsphase des intermittierenden Betriebes der Empfänger mit diesen Parametern weiterarbeiten kann, ohne Zeit für eine erneute Einregelung auf die optimalen Verstärkungseigenschaften zu benötigen. Mittels dieses intermittierenden Betriebes kann bei gleicher Leistung vergleichbarer bekannter im Dauerempfangsbetrieb betriebener Empfänger eine deutliche Senkung der Stromaufnahme erreicht werden, wodurch sich bei einer Senkung des Stromes von bspw. 1 mA auf 15 $\mu$A batteriebetriebene Anwendungen leicht realisieren lassen.

Gemäß einer vorteilhaften Weiterbildung der Erfindung können diese Verstärkereinstellungen während der energiefrei geschalteten Phase des intermittierenden Betriebes gespeichert werden, um damit in einer sich anschließenden Phase der Empfangsbereitschaft des nunmehr mit Energie versorgten Empfängers sofort zur Verfügung zu stehen.

Um den Empfänger sicher aus der energiefrei geschalteten Phase des intermittierenden Betriebes, im folgenden Shut Down Modus genannt, in den mit Betriebsspannung versorgten Zustand, im folgenden Aufweck Modus genannt, zu bringen, ist es vorteilhaft, ein Startsignal für den Empfänger zu erzeugen, dessen Signaldauer die Zeitdauer des Shut Down Modus überschreitet und diesen Zustand so lange zu halten, bis nach Ablauf einer vorgegebenen Wartezeit nach dem Empfang eines modulierten Trägersignals kein weiteres Trägersignal empfangen wird. Vorzugsweise wird nach Ablauf dieser Wartezeit der intermittierende Betrieb wieder aufgenommen.

In vorteilhafter Weise kann der Aufweck- und Shut Down Modus automatisiert mittels des Lade- und Entladevorganges eines elektrischen Speicherelementes, insbesondere mittels eines Kondensators, ablaufen. Im Aufweck Modus wird ein ankommendes Datensignal automatisch erkannt und der Empfänger (d. h. die erste Gruppe von Schaltungsteilen) bleibt im Aufweck Modus, also empfangsbereit. Nach der Bearbeitung der Empfangssignale und einer erneuten Wartezeit wechselt die erste Gruppe der Schaltungsteile zurück in den Shut Down Modus. Mit der Größe des elektrischen Speicherelementes, also bspw. mit der Größe eines Kondensators läßt sich das Tastverhältnis des intermittierenden Betriebes frei wählen, womit verschieden lange Shut Down Phasen einstellbar sind, die die Zeitdauer des Startsignales (Vor-Burst) bestimmen. Folglich ist eine Gewichtung der mittleren Stromaufnahme gegenüber der Antwortzeit entsprechend der gewünschten Anwendung möglich. Da dieses Verfahren mittels des Speicherelementes autark arbeitet, ist eine unidirektionale Verbindung zum Mikroprozessor ausreichend.

Ferner wird unter Verwendung des Speicherelementes, insbesondere des Kondensators mittels eines Komparators der Zeitablauf des Aufweck und Shut Down Modus realisiert, indem der Ladezustand am Speicherelement mit einem einstellbaren Referenzwert verglichen wird und in Abhängigkeit einer < - Relation oder > - Relation zwischen diesen beiden Werten die erste Gruppe der Schaltungsteile des Empfängers mit elektrischer Energie versorgt bzw. energiefrei geschaltet wird.

Gemäß einer weiteren vorteilhaften Weiterbildung der Erfindung sind zur Realisierung der Umladevorgänge eine erste und zweite Lade- und Entladeschaltung vorgesehen, wobei eine Ladestromquelle der zweiten Lade- und Entladeschaltung das entladene Speicherelement, insbesondere den Kondensator nach einer Entladung unter den Referenzwert so lange auflädt, bis für eine vorgegebene Zeitdauer der Referenzwert überschritten wird. Aus der Speicherkapazität dieses Speicherelements und dem Wert des Referenzwertes ergibt sich die Zeitdauer des Shut Down Modus.

Liegt jedoch bei Überschreiten des Referenzwertes, wenn also der Empfänger "aufgeweckt" wurde, ein trägermoduliertes Signal an, wird dieses Signal erkannt und der Ladevorgang mittels einer Ladestromquelle der ersten Lade- und Entladeschaltung bis zu einem Maximalwert weitergeführt, d. h., der Empfänger bleibt weiterhin empfangsbeit. Die Entladung beginnt erst mit dem Ende eines trägermodulierten Signals mittels einer Entladestromquelle der zweiten Lade- und Entladestromquelle bis entweder ein neues Signal empfangen wird oder der Wert der Speicherkapazität unter den Referenzwert gefallen ist.

Bei der Realisierung des Empfängerschaltkreises als integrierte Schaltung wird das Speicherelement, insbesondere der Kondensator als externes Bauelement an einen Pin des Gehäuses angeschlossen. Falls ein diesen Schaltkreis aufnehmendes Gehäuse einen solchen Pin nicht vorsieht, kann der Aufweck und Shut Down Zyklus auch über einen bidirektionalen Ausgangsanschluß des Empfängers vom Mikroprozessor realisiert und gesteuert werden. Eine entsprechende Software übernimmt dabei die Aufgabe des Wechsels der Betriebsmodi.

Das erfindungsgemäße Verfahren soll nachfolgend anhand eines Ausführungsbeispiels im Zusammenhang mit den Zeichnungen erläutert werden. Es zeigen:

Figur 1: ein Blockschaltbild einer Empfängerschaltung gemäß der Erfindung mit einem Shut-Down-Schaltkreis,

Figur 2: ein Blockschaltbild eines in der Empfängerschaltung gemäß Figur 1 verwendeten Shut-Down-Schaltkreises, und

Figur 3: ein Logikdiagramm zur Erläuterung der Funktionsweise des Shut-Down-Schaltkreises gemäß Figur 2.

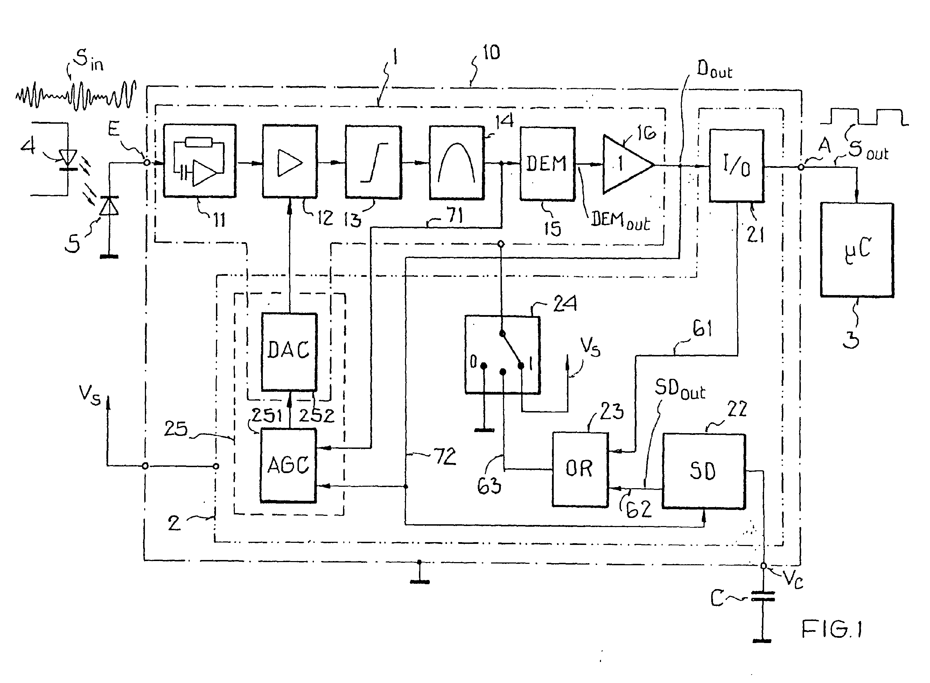

Figur 1 zeigt ein Blockdiagramm einer Empfängerschaltung 10 und seiner Umgebung. Die von einer optischen Sendediode 4 ausgestrahlten trägermodulierten Daten werden als Infrarot-Impulspakete von einer Photodiode 5 empfangen. Diese auf die Photodiode 5 auftreffenden Infrarotimpulspakete mit einer Trägerfrequenz von bspw. 38kHz werden in elektrische Strom-Signale $S_{IN}$ umgewandelt. Sie liegen am Eingangsanschluß E der Empfängerschaltung 10 an. Diese elektrischen Strom-Signale $S_{IN}$ werden einer als Transimpedanzverstärker arbeitenden Eingangsschaltung 11 zugeführt, weiche die Stromsignale $S_{IN}$ verstärkt und in Spannungssignale umgewandelt. In dem nachfolgenden Signalaufbereitungsteil werden diese Spannungssignale mittels eines Regelverstärkers 12 verstärkt, von einem Limitter 13 begrenzt und anschließend in einem Bandpassfilter 14 gefiltert.

Die Signalbegrenzung mittels des Limitters 13 ist deshalb erforderlich, um eine Übersteuerung des nachfolgenden Bandpassfilters 14 zu vermeiden und um impulsförmige Störungen, die z. B. über einen Versorgungsanschluss $V_s$ in den Empfänger gelangen, zu unterdrücken. In einem an das Bandpassfilter 14 sich anschließenden Demodulator 15 wird das bandpassgefilterte Signal demoduliert, in einem Verstärker 16 (mit Verstärkungsfaktor 1) gepuffert und über einen Eingangs- und Ausgangsschaltkreis (I/O) 21 als Ausgangssignal $S_{OUT}$ an einem Ausgangsanschluß A einem Mikrokontroller 3 zur weiteren Verarbeitung zur Verfügung gestellt.

Um die Verstärkung des von der Sendediode 4 ausgestrahlten Nutzsignals und damit die Empfindlichkeit des Empfängers zu optimieren, weist die Empfängerschaltung 10 eine Regelschaltung 25 auf, die Regelsignale dem Regelverstärker 12 zuführt und die ihrerseits das Ausgangssignal des Bandpassfilters 14 über eine Leitung 71 sowie das vom Demodulator 15 und dem Verstärker 16 erzeugte Ausgangssignal $D_{out}$ über eine Leitung 72 als Eingangssignale erhält. Die Aufgabe dieser Regelschaltung 25 ist es, das Signal/Rauschverhältnis zu optimieren, indem die Verstärkung des Eingangssignal $S_{IN}$ in Abhängigkeit von der Größe des Eingangssignals verändert wird. Die Regelschaltung 25 ist aus einem Regellogikteil (AGC) 251 und einem Digital-Analog-Umsetzer (DAC) 252 aufgebaut. Der Regellogikteil 251 trennt das Nutz- von den Störsignalen und stellt die Verstärkung für die Nutzsignale auf ein möglichst hohes Niveau, womit einerseits eine hohe Empfindlichkeit für die Nutzsignale erreicht wird und andererseits Störeinflüsse, bspw. von Fremdlicht reduziert werden. Der Digital-Analog-Umsetzer 252 wandelt die von dem Regellogikteil 251 erzeugte digitale Verstärkerinformation in eine analoge Steuerspannung für den Regelverstärker 12 um.

Die von dem Eingangssignal $S_{IN}$ zur Rückgewinnung der Daten durchlaufenen Schaltungsteile, also die Eingangsschaltung 11, der Limitter 12, das Bandpassfilter 14, der Demodulator 15 und der Verstärker 16 bilden zusammen mit dem Digital-Analog-Umsetzer 252 eine erste Gruppe 1 von Schaltungsteilen des Empfängerschaltkreises 10 und wird über einen von einem Schaltungsteil (SD) 22 und einem OR-Gatter 23 gesteuerten Umschalter 24 mit einer Betriebsspannungsquelle $V_s$ verbunden. Dagegen sind die zuletzt genannten Schaltungsteile 22, 23 und 24 als auch das Regellogikteil 251 und die Eingangs- und Ausgangsschaltung 21 direkt mit der Betriebsspannungsquelle $V_s$ verbunden und stellen eine zweite Gruppe 2 von Schaltungsteilen des Empfängerschaltkreises 10 dar.

Zur Durchführung eines intermittierenden Betriebes der Empfangsbereitschaft wird nicht - wie im Stand der Technik - der gesamte Empfängerschaltkreis 10 von der Betriebsspannungsquelle $V_s$ zyklisch freigeschaltet, sondern lediglich die als wesentlich hinsichtlich der Stromaufnahme betrachtete erste Gruppe 1 von Schaltungsteilen, indem über den Umschalter 24 die Schaltungsteile der ersten Gruppe 1 intermittierend mit der Betriebsspannungsquelle $V_s$ verbunden werden. Dabei können digitale Informationen, wie die der Umgebung angepaßten Regeleinstellung, d. h. insbesondere die Verstärkungseinstellung - ohne eine hohe Stromaufnahme zu bewirken - in der Regelschaltung 25 gespeichert werden. Dies wird bei einer Realisierung des Regellogikteils 251 in einer MOS-Technologie dadurch bewirkt, daß die entsprechenden Schaltungsteile unter Beibehaltung der Spannungsversorgung taktfrei betrieben werden. Bei Wiederinbetriebnahme, also im Aufweck Modus kann der Regelverstärker 12 mit diesen gespeicherten Werten sofort weiterarbeiten, weshalb der Empfängerschaltkreis 10 keine Zeit benötigt, um sich auf die Umgebungsbedingungen neu einzuregeln, sondern kann sofort mit optimaler Verstärkereinstellung arbeiten.

Der intermittierende Betrieb wird als automatischer Aufweck und Shut Down Modus mittels eines extern an den Empfängerschaltkreis 10 angeschlossenen Kondensator C realisiert, indem über von dem Shut-Down-Schaltungsteil, im folgenden SD-Schaltung 22 genannt, gesteuerten Lade- und Entladevorgänge der Zeitablauf bestimmt wird. Mit der Kapazität des externen Kondensators C läßt sich das Tastverhältnis des intermittierenden Betriebes frei wählen und kann damit auf verschieden lange Shut Down Zeitdauern eingestellt werden, die die Signaldauer eines Startsignales bestimmen, das die Intervallzeit des Shut Down übersteigen muß, um den Empfängerschaltkreis sicher in den Aufweck Modus wechseln zu lassen.

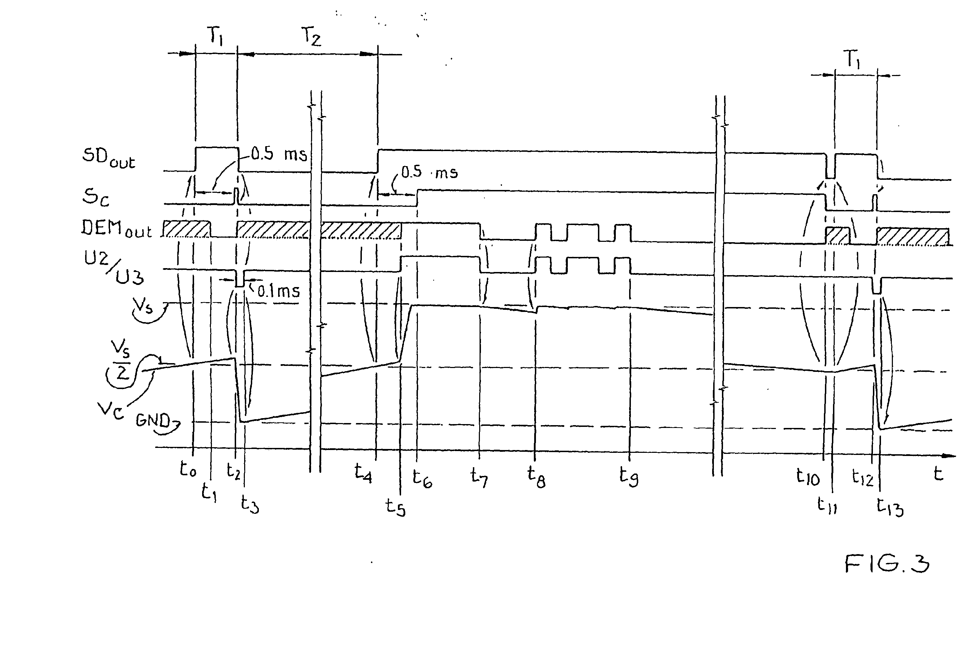

Die Auswertung des Ladezustandes, also der Ladespannung $V_C$ des Kondensators C übernimmt die SD-Schaltung 22 und steuert über das OR-Gatter 23 den Umschalter 24 entsprechend an, wie weiter unten im Zusammenhang mit der Erläuterung der Impulsdiagramme der Figur 3 beschrieben wird. Auf das OR-Gatter 23 und eine Verbindungsleitung 61 zu der Eingangs- und Ausgangsschaltung 21 kann verzichtet werden, wenn der intermittierende Betrieb ausschließlich mittels des Kondensators C und der SD-Schaltung 22 vorgenommen wird. Ist es dagegen mangels eines Anschlußpins an dem den Empfängerschaltkreis aufnehmenden Gehäuse nicht möglich, einen Kondensator C anzuschließen, erfolgt die Realisierung des Aufweck und Shut Down Modus mittels des Mikroprozessors 3, indem dieser die entsprechenden Steuerbefehle erzeugt, die über die Eingangs- und Ausgangsschaltung 21, die Leitung 61 und das OR-Gatter dem Umschalter 24 zugeführt wird. Hierzu ist jedoch zwischen der Eingangs- und Ausgangsschaltung 21 und dem Mikroprozessor 3 eine bidirektionale Datenverbindung erforderlich. Ein Softwareprogramm im Mikroprozessor 3 übernimmt dabei die Erzeugung der entsprechenden Steuerbefehle für den Umschalter 24.

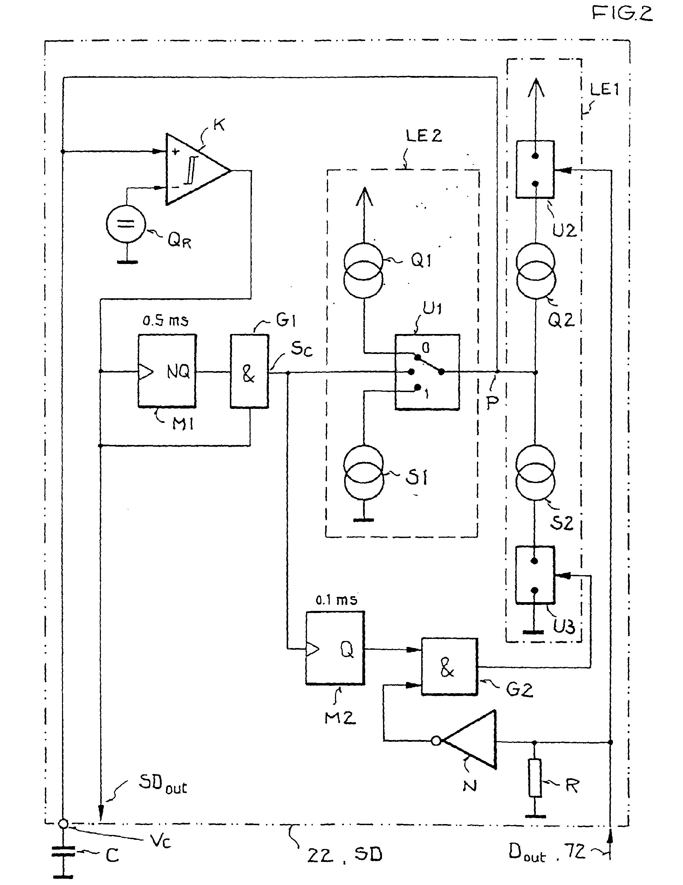

Die Realisierung der automatischen Shut Down Zyklus wird im folgenden anhand des Blockschaltbildes einer SD-Schaltung 22 nach Figur 2 in Verbindung mit den Impulsdiagrammen gemäß Figur 3 erläutert.

Gemäß Figur 2 wird die Ladung und Entladung des Kondensators C über einen Knotenpunkt P von einer ersten Lade- und Entladestromquelle LE1 und einer zweiten Lade- und Entladestromquelle LE2 mittels Ladestromquellen Q2 bzw. Q1 und Entladestromquellen S2 bzw. S1 durchgeführt. Der Ladezustand, also die Ladespannung $V_c$ am Kondensator C wird von einem Komparator K ausgewertet, indem die Ladespannung $V_c$ an dessen nicht-invertierenden Eingang und eine von einer Referenzspannungsquelle $Q_R$ erzeugten Referenzspannung $V_s/2$ an dessen invertierenden Eingang anliegt. Ein beispielhafter Verlauf der Ladespannung $V_C$ zeigt ein t-$V_C$-Impulsdiagramm gemäß Figur 3. Wird zu einem Zeitpunkt $t_0$ der Referenzwert $V_s/2$ von der Ladespannung $V_c$ überschritten, wird der Empfänger, d. h. die Schaltungsteile der ersten Gruppe 1 "aufgeweckt", indem der Ausgang des Komparators K, der eine Hysterese von bspw. 100mV ausführt, auf High-Pegel schaltet, das als Ausgangssignal $SD_{out}$ der SD-Schaltung 22 zur Verfügung steht und als t-$SD_{out}$-Impulsdiagramm in Figur 3 dargestellt ist. Dieses Ausgangssignal $SD_{out}$ wird einem Monoflop M1 (Haltezeit beträgt dabei 0,5ms) zugeführt, dessen invertierender Ausgang NQ mit einem ersten Eingang eines AND-Gatters G1 verbunden ist. Dem zweiten Eingang dieses AND-Gatters G1 wird das Ausgangssignal $SD_{out}$ direkt zugeführt, so daß an dessen Ausgang - wie in dem t-$S_C$-Impulsdiagramm gemäß Figur 3 dargestellt ist - ein Kontrollsignal $S_C$ erzeugt wird, das zur Steuerung der ersten Lade- und Entladeschaltung LE1 über ein weiteres Monoflop M2 (Haltezeit beträgt 0,1ms) und ein diesem nachgeschalteten weiteres AND-Gatter G2 als auch der Steuerung der zweiten Lade- und Entladeschaltung LE2 über einen Umschalter U1 dient. Die Lade- bzw. Entladestromquelle Q2 bzw. S2 der ersten Lade- und Entladeschaltung LE1 werden über separate Schalter U2 bzw. U3 aktiviert, deren Schalterstellung als t-U2/U3-Impulsdiagramm in Figur 3 dargestellt sind. Zur Steuerung des Schalters U2 wird das Ausgangssignal $D_{out}$ des Demodulators 15 direkt diesem Schalter U2 zugeführt, während zur Steuerung des Schalters U3 das Ausgangssignal des AND-Gatters G2 dient, an dessen zweitem Eingang das mittels eines NOT-Gatters N invertierten Ausgangssignals $D_{out}$ des Verstärkers 16, der das eigentliche Demodulatorausgangssignal $DEM_{out}$ lediglich puffert, anliegt. Mit einem gegen Masse des Empfängerschaltkreises 10 geschalteter hochohmiger Widerstand R wird das Potential des Demodulatorausgangssignals $D_{out}$ im Shut Down Modus auf Low-Pegel gehalten.

Wie schon oben hinsichtlich des t-$V_C$-Impulsdiagrammes nach Figur 3 erwähnt, erreicht zum Zeitpunkt $t_0$ die Ladespannung $V_C$ die Referenzspannung $V_s/2$, infolgedessen das Ausgangssignal $SD_{out}$ seinen High-Pegel annimmt, wodurch der Umschalter 24 (vgl. Figur 1) die Gruppe 1 der Schaltungsteile mit der Spannungsversorgung $V_s$ verbindet. Dies führt jedoch nicht sofort zur Empfangsbereitschaft, also in den Aufweck Modus des Empfängerschaltkreises 10, sondern erst nach einer kurzen Einschwingzeit, nämlich zum Zeitpunkt $t_1$. Nach Ablauf der Haltezeit von 0,5ms am Monoflop M1 erzeugt das AND-Gatter G1 einen Pegelwechsel auf High, wodurch der Umschalter U1 den Knotenpunkt P mit der Entladestromquelle S1 verbindet und gleichzeitig der Ausgang des Monoflops M2 für 0,1ms auf High-Pegel bleibt, so daß aufgrund eines fehlenden Signales $D_{out}$ auch das NOT-Gatter N auf High-Pegel wechselt, womit das AND-Gatter G2 ebenfalls einen High-Pegel erzeugt, der den Schalter U3 zum Schließen bringt, so daß die Entladestromquelle S2 definiert für die Zeitdauer von 0,1ms aktiv wird. Die Entladung führt zum Zeitpunkt $t_2$ zum Unterschreiten der Referenzspannung $V_s/2$, wodurch zunächst das Ausgangssignal $SD_{out}$ des Komparators K auf Low-Pegel fällt und infolgedessen einerseits der Aufweck Modus beendet wird und andererseits das Steuersignal $S_C$ auf Low-Pegel wechselt und gleichzeitig der Umschalter U1 die Ladestromquelle Q1 wieder mit dem Knotenpunkt P verbindet. Da jedoch dessen Ladestrom von bspw. 100nA um Größenordnungen geringer ist als der Entladestrom der Entladestromquelle S2 von bspw. 150µA, wird der Entladevorgang bis zur vollständigen Entladung des Kondensators C zum Zeitpunkt $t_3$ kaum beeinflußt. Der Ladevorgang vom Zeitpunkt $t_0$ bis $t_2$ bestimmt die Zeitdauer $T_1$ des High-Pegels des Signales $SD_{out}$ und damit die Phasendauer des Aufweck Modus, falls während dieser Phase kein Signal empfangen wird.

In dem t-$DEM_{out}$-Impulsdiagramm gemäß Figur 3 sind doppelt schraffierte Impulszüge dargestellt, die diejenigen Zeitintervalle anzeigen, zu denen der Demodulator 15 kein definiertes Ausgangssignal $DEM_{out}$ erzeugt, während die anderen Impulszüge als High- und Low-Pegel eine Datenübertragung mit definiertem Ausgangssignal $DEM_{out}$ bei empfangsbereiten Empfängerschaltkreis anzeigen. Der Pufferschaltkreis 16 erzeugt hieraus zu allen Zeiten ein definiertes Ausgangssignal $D_{out}$

Da zum Zeitpunkt $t_3$ der Entladevorgang mittels der Entladestromquelle S2 beendet ist, wird der Kondensator C durch die schon seit dem Zeitpunkt $t_2$ angeschalteten Ladestromquelle Q1 geladen. Erreicht die Ladespannung zum Zeitpunkt $t_4$ am Kondensator C wieder den Referenzwert $V_s/2$, wird wieder eine die Spannungsversorgung der Schaltungsgruppe 1 - also den Beginn der nächsten Aufweck Phase - bewirkende ansteigende Flanke des Ausgangssignales $SD_{out}$ erzeugt. Zu diesem Zeitpunkt $t_4$ ist also der Shut Down Modus, der zum Zeitpunkt $t_2$ begann, beendet, dessen Zeitdauer $T_2$ durch die Kapazität des externen Kondensators C, dem Ladestrom $I_{Q2}$ der Ladestromquelle Q1 und des vorgegebenen Referenzwertes $V_s/2$ zu

$$T_2 = ((C \cdot V_s/2\,)\,/\,I_{Q2}) + 0{,}1$$

ergibt.

Der zum Zeitpunkt $t_4$ andauernde Ladevorgang wird bis zum Zeitpunkt $t_5$, bei dem wieder nach einer Einschwingphase der Empfängerschaltkreis empfangsbereit ist, fortgeführt. Da nun zu diesem Zeitpunkt $t_5$ aufgrund eines Empfangssignals ein High-Pegel des Signals $D_{out}$ vorliegt, lädt zusätzlich zur Ladestromquelle Q1 auch die Ladestromquelle Q2 über den eingeschalteten Schalter U2 den Kondensator C bis auf die maximale Ladespannung $V_s$.

Aufgrund der Haltezeit von 0,5ms des Monoflops M1 wird zum Zeitpunkt $t_6$ eine ansteigende Flanke des Steuersignals $S_C$ erzeugt, die nur eine Umschaltung mittels des Umschalters U1 von der Ladestromquelle Q1 auf die Entladestromquelle S1 bewirkt. Aufgrund des um Größenordnungen kleineren Entladestromes von bspw. 50nA der Entladestromquelle S1 gegenüber dem Ladestrom von bspw. 75µA der Ladestromquelle Q2 wird der Kondensator C trotzdem auf der maximalen Ladespannung $V_S$ gehalten.

Im Anschluß an den Zeitpunkt $t_5$ erfolgt die Bearbeitung des empfangenen Datensignales durch den Empfängerschaltkreis, wobei eine abfallende Flanke des Signales $DEM_{out}$ und damit auch des Signals $D_{out}$, wie bspw. zum Zeitpunkt $t_7$, eine Öffnung des Schalters U2 zur Beendigung des Ladevorganges bewirkt und aufgrund des High-Pegels des Kontrollsignals $S_C$ eine Entladung des Kondensators C mittels der Entladestromquelle S1 der zweiten Lade- und Entladestromquelle LE2 so lange erfolgt, bis durch die nächste ansteigende Flanke des Signales $DEM_{out}$, bspw. zum Zeitpunkt $t_8$ wieder die Ladestromquelle Q2 zugeschaltet wird und dadurch für die Zeitdauer des High-Pegels der Kondensator C - maximal auf $V_S$ - geladen wird.

Nach Ende eines Datensignales, wie bspw. zum Zeitpunkt $t_9$, erfolgt eine Entladung bis unter den Referenzwert $V_s/2$, der zum Zeitpunkt $t_{10}$ erreicht wird. Die Entladedauer beträgt dabei ungefähr $2T_2$, also die doppelte Shut Down Phasendauer, da die Ladestromstärke der Entladestromquelle S1 50% der Ladestromstärke der Ladestromquelle Q1 beträgt. Dies bedeutet also, daß bei einer Datenübertragung während eines Zeitintervalles $2T_2$ ein Flankenwechsel die Ladestromquelle Q2 zu- oder abgeschaltet und bei fehlender Datenübertragung am Ende dieses Zeitintervalles $2T_2$, wie bspw. zum Zeitpunkt $t_{10}$, veranlaßt durch die abfallende Flanke des $SD_{out}$-Signales die Schaltungsgruppe 1 von der Spannungsversorgung getrennt wird, also der Empfängerschaltkreis wieder in den Shut Down Modus wechselt. Als Folge hiervon fällt auch das Steuersignal $S_C$ auf Low-Pegel, wodurch der Umschalter U1 die Ladestromquelle Q1 mit dem Knotenpunkt P verbindet. Der dadurch bewirkte Ladevorgang führt zum Zeitpunkt $t_{11}$ zum Erreichen des Referenzwertes $V_s/2$ und damit wieder zur Erzeugung eines High-Pegels des $SD_{out}$-Signales und in Folge hiervon in den Aufweck Modus, der zum Zeitpunkt $T_{12}$ - also nach Ablauf der Aufweckphase $T_1$ - aufgrund eines fehlenden Datensignales beendet wird. Nun beginnt wieder ein den Zeitpunkten $t_2$ und $t_3$ entsprechender Vorgang, wobei die Zeitpunkte $t_{12}$ und $t_{13}$ den Zeitpunkten $t_2$ und $t_3$ entsprechen.

**Patentansprüche**

1. Energiesparendes Verfahren für den drahtlosen Empfang von auf einem Trägersignal aufmodulierten Daten mittels einer eine erste Gruppe (1) und eine zweite Gruppe (2) von Schaltungsteilen umfassenden Empfängerschaltung (10), bei dem die zur Rückgewinnung der Daten aus dem Trägersignal ($S_{in}$) vorgesehene erste Gruppe (1) von Schaltungsteilen intermittierend mit elektrischer Energie versorgt wird, während die zweite Gruppe (2) von Schaltungsteilen ununterbrochen mit elektrischer Energie versorgt wird, **dadurch gekennzeichnet, dass** den Empfängereigenschaften zugehörige Verstärkereinstellungen, wie bspw. Verstärkungsfktoren und Regeleinstellwerte, während der energielosen Zeitintervalle des intermittierenden Betriebes der ersten Gruppe (1) von Schaltungsteilen gespeichert werden.

2. Verfahren nach Anspruch 1, bei dem Schaltungsteile der zweiten Gruppe (2) in Abhängigkeit der Empfangsbedingungen und des zuletzt empfangenen modulierten Trägersignals ($S_{in}$) die Empfängereigenschaften, wie bspw. Verstärkung und Regeleinstellung, bestimmen.

3. Verfahren nach Anspruch 1 oder 2, bei dem bei Empfang eines Startsignals, dessen Signaldauer die Zeitdauer des energielosen Zustandes im intermittierenden Betrieb der ersten Gruppe (1) der Schaltungsteile überschreitet, der intermittierende Betrieb unterbrochen wird, anschließend diese Schaltungsteile so lange mit elektrischer Energie versorgt werden, bis nach Ablauf einer vorgegebenen Wartezeit nach dem Empfang eines modulierten Trägersignales ($S_{in}$) kein weiteres Trägersignal empfangen wird.

**4.** Verfahren nach Anspruch 3, bei dem nach Ablauf der Wartezeit der intermittierende Betrieb wieder aufgenommen wird.

**5.** Verfahren nach einem der vorangehenden Ansprüche, bei dem der Zeitablauf des intermittierenden Betriebes durch einen Lade- und Entladevorgang eines elektrischen Speicherelementes (C), insbesondere eines Kondensators, bestimmt wird.

**6.** Verfahren nach Anspruch 5, bei dem zur Durchführung des intermittierenden Betriebes der Wert ($V_C$) des Ladezustandes des Speicherelementes (C), insbesondere die Ladespannung ($V_C$) am Kondensator, mittels eines Komparators (K) mit einem Referenzwert ($V_s/2$) verglichen wird und in Abhängigkeit einer < - Relation oder >-Relation zwischen diesen beiden Werten ($V_C$, $V_s/2$) der intermittierende Betrieb durchgeführt wird.

**7.** Verfahren nach Anspruch 6, bei dem mit der Entladung des Speicherelementes (C) unter den Referenzwert ($V_s/2$) mittels einer Entladestromquelle ($S_2$) einer ersten Lade- und Entladeschaltung (LE1) die energiefreie Phase des intermittierenden Betriebes beginnt und deren Zeitdauer der Ladedauer des sich daran anschließenden ersten Ladevorganges mittels einer Ladestromquelle ($Q_1$) einer zweiten Lade- und Entladeschaltung (LE2) entspricht, wobei dieser erste Ladevorgang nach Ablauf einer vorgegebenen Zeitdauer nach Erreichen des Referenzwertes ($V_s/2$) endet.

**8.** Verfahren nach Anspruch 7, bei dem sich an den ersten Ladevorgang ein zweiter Ladevorgang mittels einer Ladestromquelle ($Q_2$) der ersten Lade- und Entladeschaltung (LE1) anschließt, falls am Ende des ersten Ladevorganges ein moduliertes Trägersignal empfangen wird und bei dem mit Ende des modulierten Trägersignales ein Entladevorgang mittels einer Entladestromquelle ($S_1$) der zweiten Lade- und Entladeschaltung durchgeführt wird, bis ein weiteres moduliertes Trägersignal empfangen wird und **dadurch** der zweite Ladevorgang fortgesetzt wird oder bis der Wert ($V_C$) des Ladezustandes den Referenzwert ($V_s/2$) unterschreitet und sich daran der erste Ladevorgang anschließt.

**Claims**

**1.** Energy-saving method for the wireless reception of data modulated on a carrier signal by means of a receiver circuit (10) including a first group (1) and a second group (2) of circuit elements, wherein the first group (1) of circuit elements provided for recovering the data from the carrier signal ($S_{in}$) is supplied intermittently with electrical energy, while the second group (2) of circuit elements is supplied uninterruptedly with electrical energy, **characterized in that** amplifier settings such as gain factors and control set values associated with the receiver properties are stored during the energy-free time intervals of the intermittent operation of the first group (1) of circuit elements.

**2.** Method according to claim 1, wherein circuit elements of the second group (2) determine the reception properties such as the amplification and the control setting in dependence on the reception conditions and the last received, modulated carrier signal ($S_{in}$).

**3.** Method according to claim 1 or claim 2, wherein the intermittent operation is interrupted on the reception of a start signal, whose signal duration exceeds the duration of the energy-free state in intermittent operation of the first group (1) of circuit elements, subsequently these circuit elements are supplied with electrical energy until no further carrier signal is received after the expiry of a specified waiting time after the reception of a modulated carrier signal ($S_{in}$).

**4.** Method according to claim 3, wherein the intermittent operation is resumed after the expiry of the waiting time.

**5.** Method according to any one of the preceding claims, wherein the time procedure of the intermittent operation is determined by a charging and discharging process of an electrical storage element (C), in particular a capacitor.

**6.** Method according to claim 5, wherein, for the carrying out of the intermittent operation, the value ($V_C$) of the state of charge of the storage element (C), in particular the charging voltage ($V_C$) at the capacitor, is compared by means of a comparator (K) with a reference value ($V_s/2$), and the intermittent operation is carried out in dependence on a < -relation or > -relation between these two values ($V_C$, $V_s/2$).

**7.** Method according to claim 6, wherein the energy-free phase of the intermittent operation begins with the discharge of the storage element (C) to below the reference value ($V_s/2$) by means of a discharge current source ($S_2$) of a first

charging and discharging circuit (LE1), and the duration of said energy-free phase corresponds to the charging period of the subsequent first charging process by means of a charging current source ($Q_1$) of a second charging and discharging circuit (LE2), with this first charging process ending after the expiry of a defined period of time after attaining the reference value ($V_s/2$).

**8.** Method according to claim 7, wherein a second charging process by means of a charging current source ($Q_2$) of the first charging and discharging circuit (LE1) follows the first charging process, if a modulated carrier signal is received at the end of the first charging process, and wherein a discharging process is carried out by means of a discharge current source ($S_1$) of the second charging and discharging circuit at the end of the modulated carrier signal, until a further modulated carrier signal is received, and the second charging process is thereby continued, or until the value ($V_C$) of the state of charge falls below the reference value ($V_s/2$), and is followed by the first charging process.

## Revendications

**1.** Procédé économique en énergie pour la réception sans fil de données modulées sur un signal porteur au moyen d'un circuit récepteur (10), comprenant un premier groupe (1) et un deuxième groupe (2) de parties de circuit, dans lequel le premier groupe (1) de parties de circuit, prévu pour la récupération de données provenant du signal porteur ($S_{in}$), est alimenté de manière intermittente en énergie électrique, tandis que le deuxième groupe (2) de parties de circuit est alimenté en énergie électrique sans interruption, **caractérisé en ce que** des réglages d'amplificateur, tels que par exemple des facteurs d'amplification et des valeurs de réglage d'asservissement, appartenant aux propriétés de récepteur sont mémorisés pendant l'intervalle temporel sans énergie du fonctionnement intermittent du premier groupe (1) de parties de circuit.

**2.** Procédé selon la revendication 1, dans lequel des parties de circuit du deuxième groupe (2) déterminent, en fonction des conditions de réception et du signal porteur ($S_{in}$) modulé reçu en dernier, les propriétés de récepteur telles que par exemple l'amplification et le réglage.

**3.** Procédé selon la revendication 1 ou 2, dans lequel lors de la réception d'un signal de départ dont la durée de signal dépasse la durée temporelle de l'état sans énergie au fonctionnement intermittent du premier groupe (1) des parties de circuit, le fonctionnement intermittent est interrompu, ces parties de circuit sont ensuite alimentées en énergie électrique aussi longtemps que, après l'écoulement d'un temps d'attente prédéterminé après la réception d'un signal porteur ($S_{in}$) modulé, aucun autre signal porteur n'est reçu.

**4.** Procédé selon la revendication 3, dans lequel le fonctionnement intermittent est repris après l'écoulement du temps d'attente.

**5.** Procédé selon l'une des revendications précédentes, dans lequel la période temporelle du fonctionnement intermittent est déterminée par une opération de charge et de décharge d'un élément d'accumulation (C) électrique, en particulier d'un condensateur.

**6.** Procédé selon la revendication 5, dans lequel pour effectuer le fonctionnement intermittent, la valeur (Vc) de l'état de charge de l'élément d'accumulation (C) en particulier la tension de charge au condensateur (Vc) est comparée, au moyen d'un comparateur (K), avec une valeur de référence ($V_s/2$) et le fonctionnement intermittent est effectué en fonction d'une relation "inférieure à" ou d'une relation "supérieure à" entre ces deux valeurs (Vc, $V_s/2$).

**7.** Procédé selon la revendication 6, dans lequel avec la décharge de l'élément d'accumulation (C) au-dessous de la valeur de référence ($V_S/2$) au moyen d'une source de courant de décharge ($S_2$) d'un premier circuit de charge et de décharge (LE1), commence la phase libre d'énergie du fonctionnement intermittent, et sa durée temporelle correspond à la durée de charge de la première opération de charge qui s'y raccorde, au moyen d'une source de courant de charge ($Q_1$) d'un deuxième circuit de charge et de décharge (LE2), cette première opération de charge se terminant après l'écoulement d'une durée temporelle prédéterminée après avoir atteint la valeur de référence ($V_s/2$).

**8.** Procédé selon la revendication 7, dans lequel à la première opération de charge se raccorde une deuxième opération de charge au moyen d'une source de courant de charge ($Q_2$) du premier circuit de charge et de décharge (LE1), au cas où un signal porteur modulé est reçu à la fin de la première opération de charge, et dans lequel avec la fin du signal porteur modulé, une opération de décharge est effectuée au moyen d'une source de courant de décharge ($S_1$), du deuxième circuit de charge et de décharge, jusqu'à ce qu'un autre signal porteur modulé soit reçu et la deuxième opération de charge est par conséquent poursuivie ou jusqu'à ce que la valeur (Vc) de l'état de charge passe au-dessous de la valeur de référence ($V_S/2$) et la première opération de charge s'y raccorde.

FIG.1

FIG.2

FIG. 3